# EUROPEAN PATENT APPLICATION

(11) **EP 2 257 050 A1**
(43) Date of publication of application: **01.12.2010**
(21) Application number: 10164273.4
(22) Date of filing: 28.05.2010
(51) Int. Cl.: H04N 5/445, H04N 5/76, H04N 7/16

(54) **Electronic apparatus and method for recording content**

(30) Priority: 29.05.2009 IN KO08062009; 16.03.2010 KR 20100023394
(71) Applicant: SAMSUNG ELECTRONICS CO., LTD., Suwon-si Gyeonggi-do 442-742 (KR)
(72) Inventor: Anubhav, Nigam, Ghaziabad U.P. (IN); Sariya, Ansari, Lucknow -3 U.P. (IN)
(74) Representative: Rooney, John-Paul

(57) **Abstract**

Provided are an electronic apparatus (100) capable of recording content and method thereof, the electronic apparatus (100) including: a receiver (110) which receives a broadcast signal that includes a content including a plurality of discretely recordable detailed contents and an electronic programming guide (EPG) including information about the detailed contents and the content; a signal processor (120) which extracts the EPG from the broadcast signal, extracts the information about the content and the plurality of detailed contents from the EPG, and extracts a detailed content from the content; a user input receiver (130) which receives a user's selection using the information about the extracted detailed contents; and a controller (140) which controls the signal processor (120) to extract the detailed content from the content in accordance with the received user's selection, and records the extracted detailed content.

## Description

### BACKGROUND

### 1. Field

Apparatuses and methods consistent with exemplary embodiments relate to an electronic apparatus and method for recording content, and more particularly, to an electronic apparatus and method for discretely recording a plurality of detailed contents included in the content. In more detail, the apparatus and the method relate to a field of real time television media broadcast content and an associated conditional information system that allows a user to record content and enhances the use of scheduled recording with an Electronic Programming Guide (EPG) by providing a discrete price rate on a single multimedia content and generates more revenue for a service provider/broadcaster/media owner.

### 2. Description of the Related Art

U.S. Patent Application Publication No. 2004/0221308 A1 (hereinafter "document") discloses an integrated media viewing environment including a user interface (UI). The document describes a method for providing a program guide with an integrated media viewing environment with on-screen displays. For obtaining, viewing and/or recording media content which is currently airing or downloaded, available via data streaming on an "on demand basis," or available from local storage or removable media, a single integrated on screen display may be used.

A method for reserving, recording and viewing a broadcast program on a display screen is disclosed in U.S. Patent Application Publication No. 2003/0115604. Here, a broadcast program timetable is extracted, and the broadcast program timetable and a viewing reservation timetable are simultaneously displayed. After waiting for a selection input to select a broadcast program on the display screen, and an allocation input to allocate a selected program into the viewing reservation timetable, a recording instruction is generated to instruct a recording of the selected program, and a reproduction reservation instruction is generated to instruct a reproduction of the selected program at a time corresponding to a position at which the selected program is allocated in the viewing reservation timetable.

There is a need to utilize more broadcasting multimedia content and provide a competent way to augment the provided features for recording the multimedia content through an Electronic Programming Guide (EPG).

### SUMMARY

One or more exemplary embodiments provide an apparatus to utilize more broadcasting multimedia content for providing a competent way to augment the provided features for recording multimedia through an EPG, via on-the-fly and schedule recording.

Another exemplary embodiment provides an apparatus and method which obtain, using an electronic program guide (EPG), information on real time television media broadcast content and associated conditional information, extract selected specific content from the television broadcast content, and store or record the selected broadcast content.

According to an aspect of an exemplary embodiment, there is provided an electronic apparatus capable of recording contents, the electronic apparatus including: a receiver which receives a broadcast signal that includes a content comprising a plurality of discretely recordable detailed contents and an electronic programming guide (EPG) including information about the detailed contents and the content; a signal processor which extracts the EPG from the broadcast signal, extracts the information about the content and the plurality of detailed contents from the EPG, and extracts a detailed content from the content; a user input receiver which receives a user's selection using the information about the extracted detailed contents; and a controller which controls the signal processor to extract the detailed content from the content in accordance with the received user's selection, and records the extracted detailed content.

The electronic apparatus may further include: a user interface (UI) generating unit which generates a UI; and a display unit which displays the generated UI, wherein the controller controls the UI generating unit to generate and display a UI showing the information about the plurality of detailed contents on the display unit in response to receiving a certain key input through the user input receiver.

The information about the plurality of detailed content may include at least one of kinds, titles and prices of all of the detailed contents discretely recordable by a user from the content.

The plurality of detailed contents may include at least one of an audio content, a moving image content, and a still image content of the content.

The audio content may include at least one of a background music content, an embedded music content, a sound effect content, a voice content based on a specific cast, and a voice content based on a particular actor of the content.

The moving image content may include at least one of a moving picture content excluding an audio content from the content, a moving image content including an audio content and corresponding to a temporal part in the content, a moving image content based on a specific cast in the content, and a moving image content based on a specific actor in the content.

The still image content may include at least one of a screenshot image content at a specific point of time in the content, and a snapshot of a specific cast or a specific actor.

The controller may determine whether a user has an authority to record the selected content when receiving the user's selection through the user input receiver, and record the selected content if the user has the authority.

The controller may perform an on-the-fly recording of to the selected content.

The controller may previously determine whether a user has the authority to record the selected content.

The controller may perform a reservation recording of the selected content.

The controller may check the EPG to obtain information about the reservation recording and previously determine whether a user has an authority to record the selected content.

Therefore, according to an exemplary embodiment, there is provided an effective recording method for a TV broadcast content recordable by a user.

According to an aspect of another exemplary embodiment, there is provided a recording method of an electronic apparatus capable of recording content, the method including: receiving a broadcast signal that includes a content including a plurality of discretely recordable detailed contents and an electronic programming guide (EPG) including information about the detailed contents and the content; extracting the EPG from the broadcast signal, and extracting the information about the content and the plurality of detailed contents from the EPG; receiving a user's selection using the information about the extracted detailed contents; and extracting and recording a detailed content corresponding to the user's selection.

The method may further include: generating a user interface (UI) showing the information about the extracted content and the plurality of detailed contents in response to receiving a certain key through a user input receiver; and displaying the generated UI on a display unit.

The information about the plurality of detailed content may include at least one of kinds, titles and prices of all detailed contents discretely recordable by a user from the content.

The plurality of detailed contents may include at least one of an audio content, a moving image content, and a still image content of the content.

The audio content may include at least one of a background music content, an embedded music content, a sound effect content, a voice content based on a specific cast, and a voice content based on a particular actor of the content.

The moving image content may include at least one of a moving picture content excluding an audio content from the content, a moving image content including an audio content and corresponding to a temporal part in the content, a moving image content based on a specific cast in the content, and a moving image content based on a specific actor in the content.

The still image content may include at least one of a screenshot image content at a specific point of time in the content, and a snapshot of a specific cast or a specific actor.

The method may further include: determining whether a user has an authority to record the selected content when receiving the user's selection through the user input receiver; and recording the selected content if the user has the authority.

The recording may include performing an on-the-fly recording of the selected content.

The on-the-fly recording may include previously determining whether a user has an authority to record the selected content.

The recording may include performing a reservation recording of the selected content.

The reservation recording may include checking the EPG to obtain information about the reservation recording and previously determining whether a user has authority to record the selected content.

According to an aspect of another exemplary embodiment, there is provided a recording method of an electronic apparatus capable of recording content, the method including: receiving a data signal including a content including a plurality of discretely recordable detailed contents; receiving a user's selection of a detailed content, from among the plurality of discretely recordable detailed contents, via an electronic programming guide (EPG) including information about the plurality of discretely recordable detailed contents and information about the content; and extracting, from the data signal, and recording the detailed content corresponding to the user's selection.

### BRIEF DESCRIPTION OF THE DRAWINGS

The above and/or other aspects will become apparent and more readily appreciated from the following description of exemplary embodiments, taken in conjunction with the accompanying drawings, in which:

FIG. 1 is a control block diagram of an electronic apparatus according to an exemplary embodiment;

FIG. 2 shows a view of an Electronic Programming Guide (EPG) with an option of partial record according to an exemplary embodiment;

FIG. 3 illustrates a discrete rate of available content with a EPG sub-option/menu according to an exemplary embodiment;

FIG. 4 shows a flowchart for an on-the-fly recording process according to an exemplary embodiment;

FIG. 5 shows a flowchart for recording using an EPG or schedule recording according to an exemplary embodiment; and

FIG. 6 shows a flowchart collectively illustrating processes of FIGs. 4 and 5.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout. Expressions such as "at least one of," when preceding a list of elements, modify the entire list of elements and do not modify the individual elements of the list.

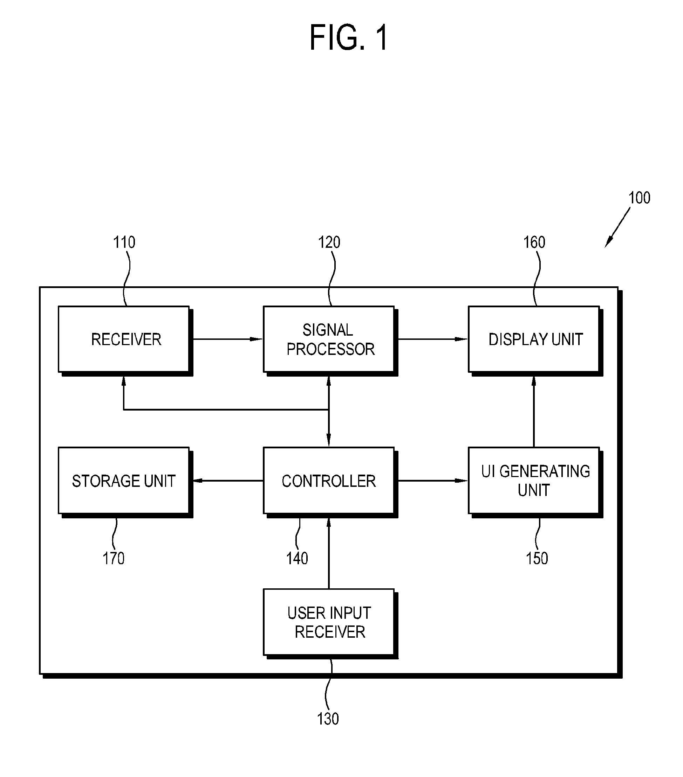

FIG. 1 is a control block diagram of an electronic apparatus 100 according to an exemplary embodiment. Referring to FIG. 1, the electronic apparatus 100 includes a receiver 110, a signal processor 120, a user input unit 130, and a controller 140.

The electronic apparatus 100 includes any electronic apparatus that can receive contents from an exterior source. For example, the electronic apparatus 100 may be a broadcast receiving apparatus capable of receiving a broadcast signal transmitted from a broadcast transmitting apparatus. Furthermore, the electronic apparatus 100 may include a television (TV), a digital TV (DTV), an Internet protocol TV (IPTV), a personal video recorder (PVR), a set top box (STB), etc.

The receiver 110 may receive a broadcast signal including an electronic program guide (EPG) that shows content including a plurality of discretely recordable detailed contents and content information including information about the detailed contents. Here, the content may include a broadcast program of a channel corresponding to the broadcast signal received in the receiver.

The detailed contents, included in the content, are separately recordable by being separated and extracted from the content. For example, the detailed contents may include at least one of an audio content, a moving image content and a still image content of the content.

Here, the audio content may refer to only an audio part extracted from the content, which may include a background music content, an embedded music content, a sound effect content, an actor's voice content, etc. of the content. Among them, the actor's voice content may include voice contents of all actors appearing in the content, a voice content based on a specific cast, or a voice content based on a particular actor.

The moving image content may include all of the content, a moving image content excluding the audio content from among all of the content, a moving image content including an audio content and corresponding to a temporal part in the content, a moving image content based on a specific cast in the content, and a moving image content based on a specific actor in the content.

The still image content may include a screenshot image content at a specific point of time in the content, and a still image content such as a snapshot of a specific cast or a specific actor.

Here, the EPG may show information about the content and the plurality of detailed contents. For example, the EPG may be a grid listing television programs by date, time and channel. Furthermore, the EPG can be displayed by a subscriber terminal at a subscriber's location.

The service provider of the broadcast programs can send a complete list of programs with the help of the EPG allowing users to preplan a recording of a program. Thus, the service provider can generate more revenue by partitioning the program content, for example, into only audio, only video, only instrumental sound without voice, snapshots of a particular actor or artist, etc., and applying charges according to the content. At the same time, the user can avoid unnecessary program content and charges therefor by selecting partial content such as only audio content, only video content, only cast-based audio content, snapshots of a particular actor, and only instrumental sound of video without the voice.

The EPG provides pictograms, logos, etc., to indicate to a television viewer the television programs being displayed on a television. Accordingly, the viewer can know what is playing on the various channels while watching one of the channels. Moreover, the viewer can select programs for watching or recording from the EPG. A broadcaster or a broadcast content provider can send all the information with an EPG for the user who wants to know the details of the broadcast content. For example, the details of all that is available for recording, what prices are for a specific content, and what data is separately available can help a user to know the full detail of the content, such as specific cast-based recording, only audio, only video, screenshots, instrumental sound of video, only voice and such other information. Using all of this information, a user can be more entertained and companies can generate more revenue. By having all the information in the EPG, a user can schedule content for recording and be informed of all items that are available in that content for entertainment.

Here, the information about the content is general information about the content, which may include at least one of a content title, a content broadcast channel, a content showing time, a content synopsis, a content copyrights information, etc.

Furthermore, the information about the plurality of detailed contents may include a list of all separated contents discretely recordable by a user among the contents, price information about the detailed contents, etc.

The signal processor 120 segments a data signal having the EPG, a video signal and an audio signal from a broadcast signal when receiving the broadcast signal including the EPG through the receiver 110. Further, the EPG is separated from the segmented data signal, and contents included in the EPG and the plurality of detailed contents from the corresponding contents are segmented.

Special flags or other types of information can also be embedded in the broadcast signal for segmentation. Thus, the signal processor 120 can segment the content information on the basis of the special flags or other types of information.

Also, the signal processor 120 may segment the content information by an algorithm to get the information at a client side, which may be referred to as on-the-fly recording. Thus, a user can manage multimedia based on the content type.

The segmented video signal is processed by a video signal processor (not shown) included in the signal processor 120 so that the video signal can be displayed through a display unit. Thus, the video signal processor may further include at least one of a scaler (not shown) to output a scaling-processed video signal having a vertical frequency, a resolution, an aspect ratio, etc. adapted to the resolution of the display unit, an analog/digital (A/D) converter (not shown) to convert an analog video signal received in the receiver into a digital video signal, a decoder (not shown) to decode the digital video signal, a format converter (not shown) to perform predetermined format conversion, etc.

The segmented audio signal is processed by an audio signal processor (not shown) included in the signal processor 120 so that the audio signal can be output through a speaker. Thus, the electronic apparatus 100 according to an exemplary embodiment may further include a speaker (not shown) to output the processed audio signal, or may transmit the processed signal to be output by an external device.

Also, the signal processor may extract the detailed contents from the contents in accordance with a user's selection received through a user input receiver 130 (to be described later) on the basis of the plurality of segmented detailed content information.

The user input receiver 130 can receive a user's selection using the extracted detailed content information. Thus, the user input receiver 130 may be achieved in the form of a receiver which receives a signal of at least one of a remote controller through which a user's selection is input, a button unit provided in the electronic apparatus, a touch panel provided for a touch screen of the electronic apparatus, etc.

The controller 140 can control the signal processor 120 to extract a detailed content from the content in accordance with a user's selection received through the user input receiver 130, and record the extracted detailed content. Here, the term "recording" may be used to describe ripping or storing.

Furthermore, the controller 140 may determine whether a user has authority on the selected content when receiving the user's selection through the user input receiver 130, and may perform the recording with regard to the selected content if the user has the authority as a result of the determination. The authority of a user may include any type of payment of a cost corresponding to the content selected by a user, and the payment may include, for example, cash, credit-card charge, mileage, cyber money, etc.

Here, the controller 140 may record the selected detailed content through on-the-fly recording. Thus, the selected detailed content can be directly recorded on an external storage medium.

In the case of performing the on-the-fly recording, the controller 140 may previously determine whether a user has authority for the specific content/detailed content, and then implement the on-the-fly recording only if it is determined that the user has the authority.

Also, the controller 140 can reserve the recording with regard to the detailed content selected by the user's selection. Thus, if a user selects the detailed content that the user wants to record and schedules the selected detailed content for reservation recording (i.e., future recording), the controller 140 can record the detailed contents selected corresponding to the schedule. Thus, the controller 140 may previously check the EPG extracted by the signal processor so as to determine the reservation information about the content/detailed content specified by a user, and may also previously determine whether the user has the authority for the specific content/detailed content. The reservation recording can be performed only when the user has the authority.

The electronic apparatus 100 may further include a storage unit 170. The controller 140 may control the storage unit 170 to store the detailed content selected by a user. The storage unit 170 may include at least one of a flash memory, a hard disk drive, etc. Further, the storage unit 170 may include at least one of a universal serial bus (USB), a compact disc-read only memory (CD-ROM), a digital versatile disc (DVD), a BluRay disc (BD), and a like external storage medium.

Also, the electronic apparatus 100 may include a user interface (UI) generating unit 150 and a display unit 160. The UI generating unit 150 may generate a UI based on the EPG extracted by the signal processor 120. The content and the detailed content extracted by the signal processor 120 may be generated as a UI.

Thus, the controller 140 controls the UI generating unit 150 to generate and display a UI showing the plurality of detailed contents on the display unit 160 when receiving a specific key input through the user input receiver 130.

The display unit 160 can display the UI generated bt the UI generating unit 150. Also, the display unit 160 can display an image corresponding to a video signal processed by the signal processor 120. Here, the display unit 160 may include various display panels such as a liquid crystal display (LCD) panel having a liquid crystal layer, an organic light emitting diode (OLED) panel having an organic light emitting layer, a plasma display panel (PDP), etc.

Thus, the electronic apparatus 100 may extract real time broadcast content. Also, copyright information about the real time broadcast content may be recorded on the external peripherals, and other information including the content/detailed content a user wants to record may be recorded onto the external storing medium, e.g., a disk directly.

The electronic apparatus 100 can enhance the copyright system of the digital media in terms of copy protection, redistribution, reuse, etc. Also, the electronic apparatus 100 provides a way to apply a price-rate discretely on digital media and allows the user to record desired digital broadcast content by paying lesser amounts.

For example, if a user is watching a particular video and wants to record only the audio of the whole content or only the video of the full content or wants to extract instrumental sound and voice separately from the content, a service provider can offer different prices for such digital contents. Furthermore, the partial content recording service provider can apply the different types of payment mechanism for different segments of the program based on the cast of the broadcasting video.

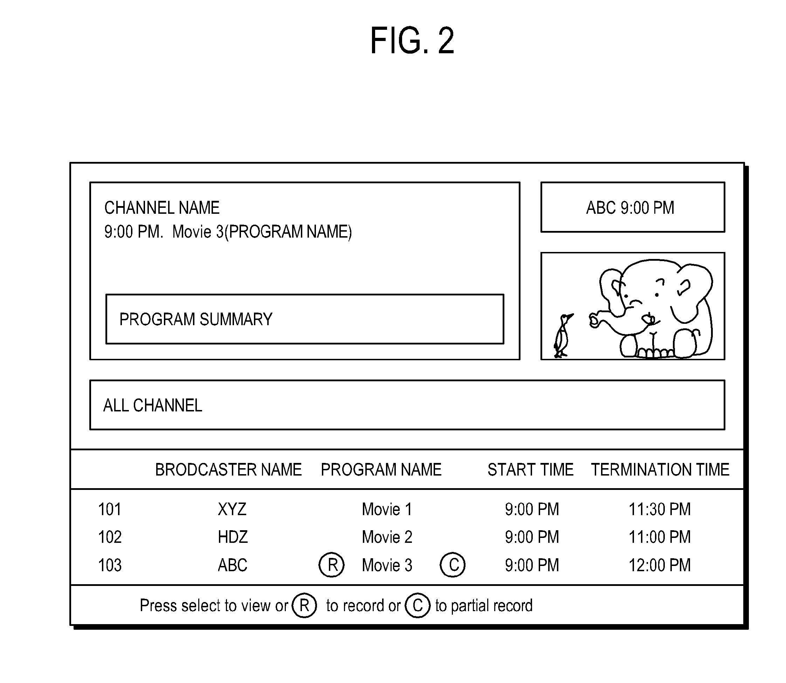

FIG. 2 shows a view of an EPG according to an exemplary embodiment, in which the EPG provides an option of partial recording. The EPG helps a viewer to identify which content includes a discretely recordable detailed content. Through the EPG, a user has a choice for recording the detailed contents. As shown in FIG. 2, a certain mark (e.g., ©) in the EPG indicates that the discretely recordable detailed contents are included in the content. Also, whenever a user presses a preset key (e.g., © or any key), a window may appear on the screen that specifies the detailed contents that are provided by the service provider/broadcaster. To record a specific detailed content, a user can schedule the specific detailed content for future recording.

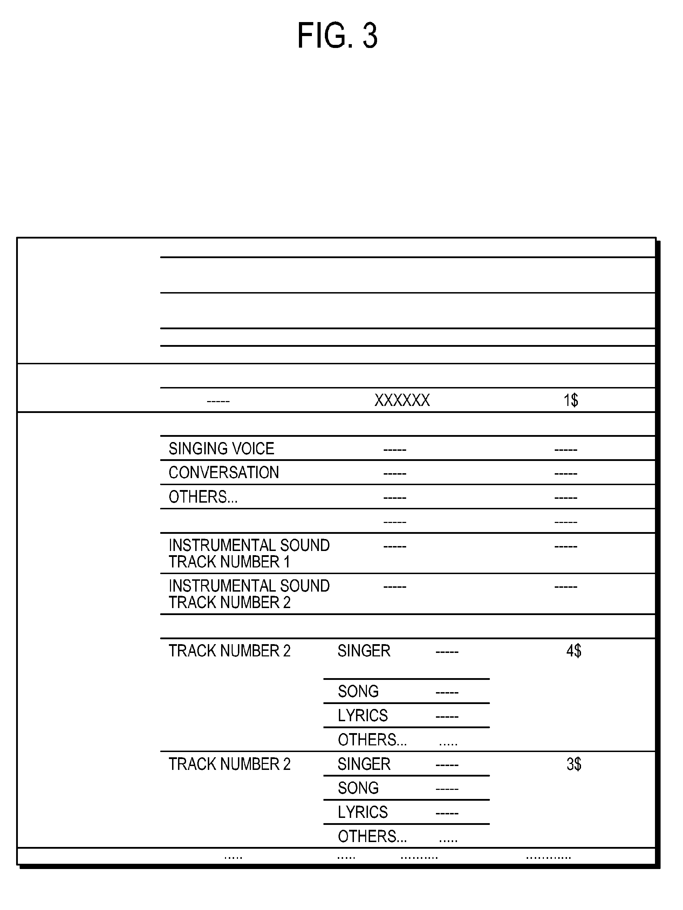

FIG. 3 shows kinds of the discretely recordable detailed contents and discrete rates therefor in one content. As illustrated in FIG. 2, if a preset specific key input is received from a user, the controller 140 controls the signal processor 120 to extract the detailed content information from the relevant content, and the UI generating unit 150 to generate and display the extracted detailed content information as a UI on the display unit 160.

As shown in FIG. 3, information about the kinds, the title and the price of the plurality of discretely recordable detailed contents in the corresponding content is displayed as a UI on the display unit 160, so that a user can select the detailed content that the user wants to record by referring to the UI.

Also, a user can schedule a future recording for the content. The information about the detailed content which can be provided in one content may be specific to a program. This information helps the service provider/broadcaster to generate more revenue from the same content by partitioning the content. At the time of broadcasting, the broadcaster may send a special flag that splits the content and allows a user to record the content dynamically. Also, in some exemplary embodiments, a user can view and record the multimedia content simultaneously.

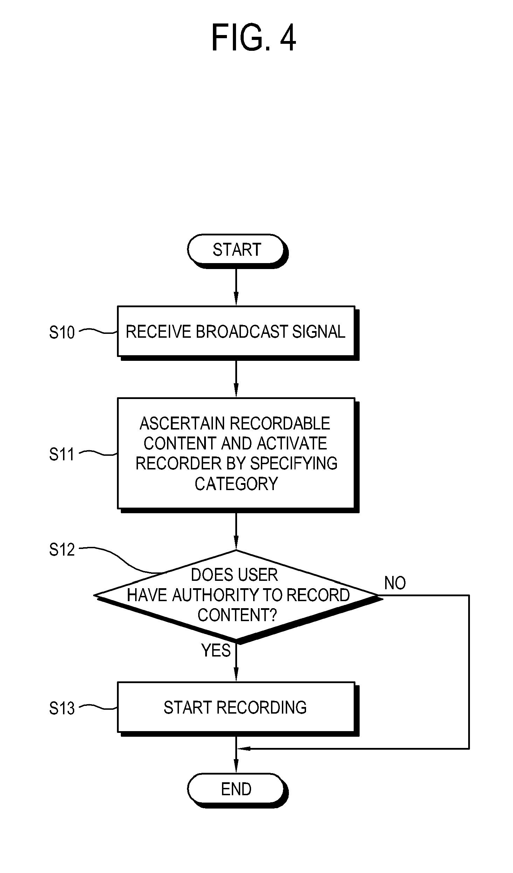

FIG. 4 shows a flowchart for an on-the-fly recording process according to an exemplary embodiment. Referring to FIG. 4, if receiving a broadcast signal with the content including the plurality of discretely recordable detailed contents and the EPG having the detailed content and content information at operation S10, the controller 140 controls the signal processor 120 to partition the broadcast signal into a data signal, a video signal and an audio signal, to extract the content information and the plurality of detailed content information by extracting the EPG from the data signal, to process the video signal to be displayed on the display unit, and to process the audio signal to be output to a speaker. When receiving a certain key input from a user through the user input receiver 130, the controller 140 checks information about the detailed contents, discretely segmented from the corresponding content and recordable, on the basis of the segmented EPG information at operation S11, and controls the UI generating unit 150 to generate and display a UI showing the detailed content information extracted by the signal processor 120 on the display unit 160. Furthermore, in the operation S11, the controller 140 activates a recorder when a category/detailed content is specified by a user through the generated UI.

The controller 140 determines whether a user has authority to record the selected content/category at operation S12,. Accordingly, the controller 140 does not perform the recording of the selected content if the user has no authority, and performs the recording if the user has the authority at operation S13.

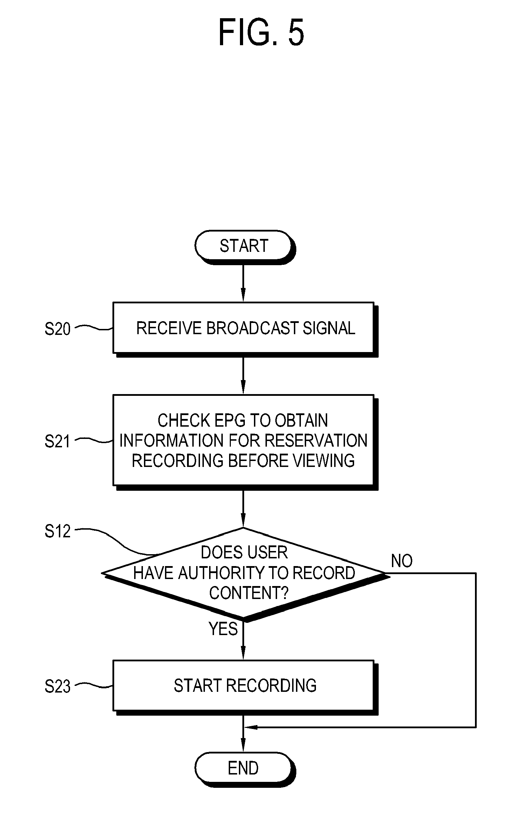

FIG. 5 shows a flowchart for performing a reservation recording according to an exemplary embodiment. If receiving a broadcast signal with the content including the plurality of discretely recordable detailed contents and the EPG having the detailed content and content information at operation S20, the controller 140 checks the EPG extracted by the signal processor 120 in order to determine whether a user has previously scheduled for recording the received broadcast signal at operation S21. If it is checked through the EPG that a user has reserved for recording the content/detailed content included in the broadcast signal, the controller 140 determines whether the user has authority for this recording at operation S22. As the result of the determination, if the user has no authority, the recording is not performed with regard to the selected content, and if the user has the authority, the recording is performed with regard to the selected content at operation S23.

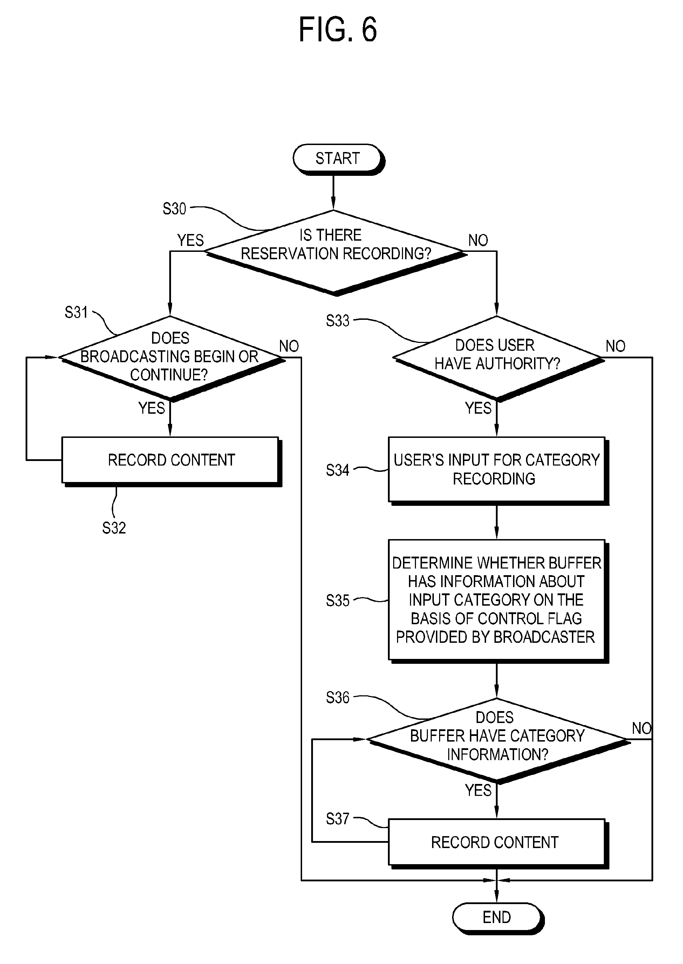

FIG. 6 shows an example of both the reservation recording and the on-the-fly recording being simultaneously performed according to another exemplary embodiment. That is, a left flowchart of FIG. 6 shows an example of the reservation recording, and a right flowchart shows an example of the on-the-fly recording.

Referring to FIG. 6, at operation S30, the controller 140 determines whether a recording has been reserved for a certain broadcast signal. As a result of the determination, if it is determined that the recording has been reserved, the controller 140 checks whether certain broadcasting corresponding to the reservation recording begins or whether the broadcasting continues at operation S31. If the broadcasting begins or continues, the content/detailed content is recorded corresponding to the reservation at operation S32.

Also, the controller 140 may determine whether a user has the recording authority at operation S33. As a result of the determination, if the user has the recording authority, the controller 140 receives a user's input for recording a certain category at operation S34. At operation S35, the controller 140 determines whether a buffer has data for the input category on the basis of a control flag or the like provided by the broadcaster. If the buffer has a series of information for performing the recording at operation S36, the content is recorded at operation S37.

As described above, exemplary embodiments provide a better method to handle television broadcasting content and the content's associated digital rights information. By partitioning the content, properties of a single content that is being broadcast are enhanced and a variety of operations for the content is provided, thereby generating more revenue for a service provider. Furthermore, digital content is employed in a more efficient way by generating revenue for a producer/broadcaster/service provider of the content.

While not restricted thereto, exemplary embodiments can also be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, exemplary embodiments may be written as computer programs transmitted over a computer-readable transmission medium, such as a carrier wave, and received and implemented in general-use or special-purpose digital computers that execute the programs. Moreover, while not required in all aspects, one or more units of the electronic apparatus 100 can include a processor or microprocessor executing a computer program stored in a computer-readable medium, such as the storage unit 170.

Although a few exemplary embodiments have been shown and described, it will be appreciated by those skilled in the art that changes may be made in these exemplary embodiments without departing from the principles of the invention, the scope of which is defined in the appended claims and their equivalents.

## Claims

1. An electronic apparatus capable of recording contents, the electronic apparatus comprising:
a receiver which receives a broadcast signal comprising:
a content comprising a plurality of discretely recordable detailed contents, and
an electronic programming guide (EPG) comprising information about the plurality of discretely recordable detailed contents and information about the content;
a signal processor which extracts the EPG from the broadcast signal, extracts the information about the plurality of discretely recordable detailed contents and the information about the content from the EPG, and extracts a detailed content, of the plurality of detailed contents, from the content;
a user input receiver which receives a user's selection using the extracted information about the plurality of discretely recordable detailed contents; and
a controller which controls the signal processor to extract the detailed content from the content in accordance with the received user's selection, and which records the extracted detailed content.

2. The electronic apparatus according to claim 1, further comprising:
a user interface (UI) generating unit which generates a UI showing the information about the plurality of discretely recordable detailed contents; and
a display unit which displays the generated UI in response to receiving a certain key input through the user input receiver.

3. The electronic apparatus according to any preceding claim, wherein the information about the plurality of discretely recordable detailed contents comprises at least one of kinds, titles and prices of the plurality of discretely recordable detailed contents which are discretely recordable by the user.

4. The electronic apparatus according to any preceding claim, wherein the plurality of discretely recordable detailed contents comprises at least one of an audio content, a moving image content, and a still image content of the content.

5. The electronic apparatus according to claim 4, wherein the audio content comprises at least one of a background music content, an embedded music content, a sound effect content, a voice content based on a specific cast, and a voice content based on a particular actor of the content.

6. The electronic apparatus according to claim 4 or claim 5, wherein the moving image content comprises at least one of a moving picture content excluding the audio content of the content, a moving image content including an audio content and corresponding to a temporal part of the content, a moving image content based on a specific cast in the content, and a moving image content based on a specific actor in the content.

7. The electronic apparatus according to claim 4, claim 5 or claim 6, wherein the still image content comprises at least one of a screenshot image content at a specific point of time in the content, and a snapshot of a specific cast or a specific actor.

8. The electronic apparatus according to any preceding claim, wherein the controller determines whether the user has an authority to record the selected detailed content in response to receiving the user's selection through the user input receiver, records the selected detailed content if the user has the authority, and does not record the selected detailed content if the user does not have the authority.

9. The electronic apparatus according to any preceding claim, wherein the controller performs an on-the-fly recording of the selected detailed content.

10. The electronic apparatus according to claim 9, wherein the controller previously determines whether the user has an authority to record the selected detailed content, and does not perform the on-the-fly recording if the user is determined to not have the authority.

11. A recording method of an electronic apparatus capable of recording content, the method comprising:
receiving a broadcast signal comprising:
a content comprising a plurality of discretely recordable detailed contents, and
an electronic programming guide (EPG) comprising information about the plurality of discretely recordable detailed contents and information about the content;
extracting the EPG from the broadcast signal, and extracting the information about the plurality of discretely recordable detailed contents and the information about the content from the EPG;
receiving a user's selection using the extracted information about the plurality of discretely recordable detailed contents; and
extracting and recording a detailed content, from among the plurality of discretely recordable detailed contents, corresponding to the user's selection.

12. The method according to claim 11, further comprising:
generating a user interface (UI) showing the information about the plurality of discretely recordable detailed contents in response to receiving a certain key through a user input receiver; and
displaying the generated UI on a display unit.

13. The method according to claim 11 or claim 12, wherein the information about the plurality of discretely recordable detailed contents comprises at least one of kinds, titles and prices of the plurality of discretely recordable detailed contents which are discretely recordable by the user.

14. The method according to claim 11, claim 12 or claim 13 wherein the plurality of discretely recordable detailed contents comprises at least one of an audio content, a moving image content, and a still image content of the content.

15. The method according to any of claims 11 to 14, further comprising:
determining whether the user has an authority to record the selected detailed content in response to receiving the user's selection through the user input receiver; and
recording the selected content if the user has the authority and not recording the selected content if the user does not have the authority.
